Europäisches Patentamt

European Patent Office

Office européen des brevets

(11) Veröffentlichungsnummer: **0 334 194 B1**

# (12) EUROPÄISCHE PATENTSCHRIFT

(45) Veröffentlichungstag der Patentschrift: **19.11.92**

(21) Anmeldenummer: **89104631.0**

(22) Anmeldetag: **15.03.89**

(51) Int. Cl.⁵: **H04L 13/00**

---

(54) **Anordnung zum Übertragen von Daten.**

---

(30) Priorität: **21.03.88 DE 3809397**

(43) Veröffentlichungstag der Anmeldung:
**27.09.89 Patentblatt 89/39**

(45) Bekanntmachung des Hinweises auf die
Patenterteilung:
**19.11.92 Patentblatt 92/47**

(84) Benannte Vertragsstaaten:
**CH DE FR GB IT LI SE**

(56) Entgegenhaltungen:
**EP-A- 0 241 784**

(73) Patentinhaber: **SIEMENS AKTIENGESELL-
SCHAFT
Wittelsbacherplatz 2
W-8000 München 2(DE)**

(72) Erfinder: **Sendlinger, Harald, Dipl.-Ing.
Dientzenhofer Strasse 22
W-8152 Feldkirchen-Westerham(DE)**
Erfinder: **Wiesner, Wolfgang, Dipl.-Ing.
Sonnenleite 19
W-8034 Germering(DE)**

---

## Beschreibung

Die Erfindung bezieht sich auf eine Anordnung zum Übertragen von Daten gemäß dem Oberbegriff des Patentanspruchs 1.

Zum Übertragen von Daten zwischen einem ersten Datenendgerät und einem zweiten Datenendgerät über eine Übertragungsstrecke sind die Datenendgeräte als Kommunikationsendgeräte ausgebildet. Ein derartiges Kommunikationsgerät ist beispielsweise eine Fernschreibmaschine. Falls ein Datenendgerät in einem Büro aufgestellt ist, in dem auch Datenstationen, wie beispielsweise Personal Computer aufgestellt sind, ist es wünschenswert, Daten, insbesondere Texte, die an der Datenstation erstellt wurden und zu einem fernen Teilnehmer übertragen werden sollen, unmittelbar von der Datenstation aus über das Datenendgerät und die Übertragungsstrecke zu dem fernen Teilnehmer zu übertragen. Ebenso ist es wünschenswert, von dem fernen Teilnehmer gesendete Daten über das Datenendgerät unmittelbar der Datenstation zuzuführen, um dort die Texte weiterverarbeiten oder ausgeben zu können.

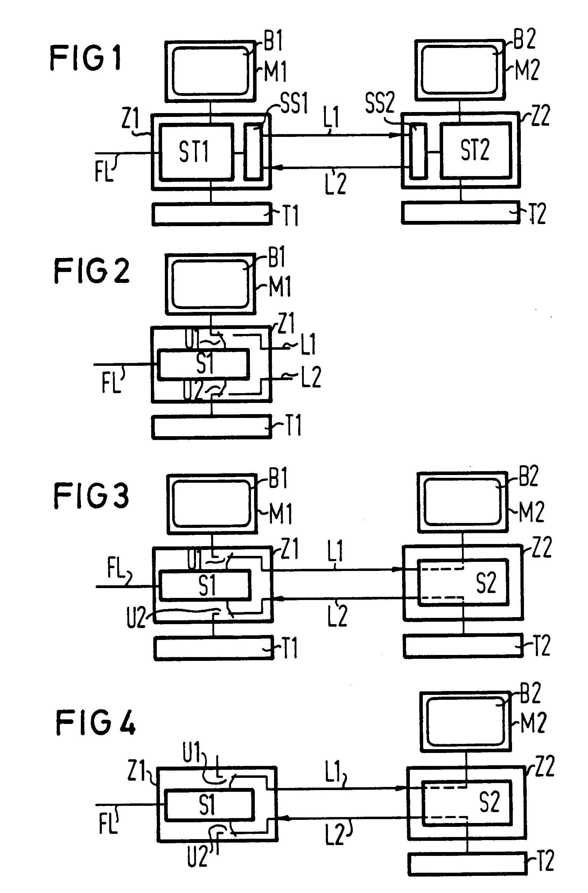

Es ist bereits bekannt, Daten zwischen einem Datenendgerät und einer Datenstation dadurch zu übertragen, daß beide mit einer geeigneten Schnittstelle versehen werden, die beispielsweise nach der international vereinbarten Schnittstelle V.24 ausgebildet ist und daß die Daten in festgelegten Prozeduren übertragen werden. Eine derartige Anordnung zum Übertragen von Daten ist in FIG 1 dargestellt. Das Datenendgerät enthält eine Zentraleinheit Z1, an der als periphere Einheiten eine Tastatur T1 und ein Monitor M1 mit einem Bildschirm B1 anschließbar sind. Zusätzlich können noch periphere Speicher und ein Drucker angeschlossen werden. Außerdem ist an dem Datenendgerät noch eine Fernleitung FL als Übertragungsstrecke angeschlossen. Die Datenstation enthält eine Zentraleinheit Z2, an der eine Tastatur T2 und ein Monitor M2 mit einem Bildschirm B2 anschließbar sind. Zusätzlich können auch an der Zentraleinheit Z2 periphere Speicher und ein Drucker angeschlossen werden.

Das Datenendgerät enthält in der Zentraleinheit Z1 eine zentrale Steuereinheit ST1, die die Funktionen des Datenendgeräts steuert. An diese ist auch eine Schnittstellensteuerung SS1 angeschlossen, über die Daten mit der Datenstation ausgetauscht werden können. Die Datenstation enthält eine zentrale Steuereinheit ST2, an der eine Schnittstellensteuereinheit SS2 angeschlossen ist, die der Schnittstellensteuereinheit SS1 in dem Datenendgerät zugeordnet ist. Unter Einhaltung festgelegter Prozeduren werden die Daten zwischen den Schnittstellensteuereinheiten SS1 und SS2 übertragen. Diese Übertragung der Daten ist jedoch nicht sehr effektiv, da die übertragenen Signale in der Regel teilweise Steuerinformationen enthalten, die angeben, was mit den eigentlichen Daten im Datenendgerät zu geschehen hat. Beispielsweise geben diese Steuerinformationen an, ob Texte gespeichert werden sollen oder ob ein Sendeauftrag ausgeführt werden soll. Außerdem hat eine derartige Anordnung den Nachteil, daß sowohl im Datenendgerät als auch in der Datenstation jeweils die Tastaturen T1 und T2 sowie die Monitore M1 und M2 in Betrieb sein müssen. Zudem haben normalerweise das Datenendgerät und die Datenstation unterschiedliche Bedienoberflächen, so daß eine Bedienperson sich jeweils bei der Betätigung der verschiedenen Geräte umstellen muß.

Der Erfindung liegt die Aufgabe zugrunde, eine Anordnung zum Übertragen von Daten anzugeben, die einen geringen Aufwand erfordert und die dennoch eine zuverlässige und effektive Übertragung von Daten zwischen dem Datenendgerät und der Datenstation ermöglicht.

Erfindungsgemäß wird die Aufgabe bei der Anordnung der eingangs genannten Art durch die im kennzeichnenden Teil des Patentanspruchs 1 angegebenen Merkmale gelöst.

Die Erfindung geht von dem Gedanken aus, das Datenendgerät von der Datenstation fernzusteuern und dabei die Bedienoberfläche des Datenendgerätes an der Datenstation zu benutzen. Einander entsprechende periphere Einheiten müssen damit nicht doppelt vorgesehen und bedient werden.

Eine besonders vorteilhafte Ausführungsform der Anordnung gemäß der Erfindung ist dadurch gekennzeichnet, daß das Datenendgerät als eine Fernschreibmaschine und/oder die Datenstation als ein Personal Computer ausgebildet sind.

Als Umschalteinrichtungen können mechanische Umschalteinrichtungen vorgesehen werden, jedoch erweist es sich als zweckmäßig, die Umschalteinrichtungen programmgesteuert auszuführen.

Die Umschaltung wird zweckmäßigerweise insbesondere selbsttätig durchgeführt. Zu diesem Zweck ist in dem Datenendgerät eine Überwachungsstufe vorgesehen, die überprüft, ob eine Verbindung zur Datenstation vorhanden ist oder nicht und dann gegebenenfalls die peripheren Einheiten des Datenendgeräts von deren Zentraleinheit abtrennt. Falls das Datenendgerät ständig mit der Datenstation verbunden ist, können diejenigen peripheren Einheiten, die bei der Datenstation ohnehin vorhanden sind, nicht nur elektrisch, sondern auch mechanisch abgetrennt und entfernt werden. In diesem Fall dient das Datenendgerät unter anderem auch als ein Leitungsabschluß für die Übertragungsstrecke, insbesondere wenn diese als Fernleitung ausgebildet ist.

Bei einer Fernsteuerung des Datenendgeräts durch die Datenstation ist es vorteilhaft, wenn in diesem Fall die Bedienoberfläche des Datenendgeräts an der Datenstation abgebildet wird.

Ausführungsbeispiele der Anordnung gemäß der Erfindung werden im folgenden anhand von Zeichnungen näher erläutert. Es zeigen

FIG 1 ein Blockschaltbild einer Anordnung zum Übertragen von Daten nach dem Stand der Technik,

FIG 2 ein Blockschaltbild eines Datenendgeräts für eine Anordnung gemäß der Erfindung,

FIG 3 ein Blockschaltbild einer ein Datenendgerät und eine Datenstation enthaltenden Anordnung und

FIG 4 ein Blockschaltbild einer ein Datenendgerät ohne periphere Einheiten und eine Datenstation enthaltenden Anordnung.

Die in FIG 2 dargestellte Anordnung zum Übertragen von Daten enthält ein Datenendgerät, das beispielsweise als eine Fernschreibmaschine ausgebildet ist und an eine eine Übertragungsstrecke bildende Fernleitung FL zum Übertragen von Daten, beispielsweise Texten, angeschlossen ist. An das Datenendgerät können Leitungen L1 und L2 angeschlossen werden, über die Daten mit einer Datenstation ausgetauscht werden können. Bei der Darstellung in FIG 2 wird jedoch zunächst angenommen, daß keine Datenstation an dem Datenendgerät angeschlossen ist.

Das Datenendgerät enthält eine Zentraleinheit Z1, eine Tastatur T1 sowie einen Monitor M1 mit einem Bildschirm B1. Zusätzlich können noch weitere periphere Einheiten, wie beispielsweise periphere Speicher oder ein Drucker angeschlossen sein. In der Zentraleinheit Z1 ist eine Steuereinheit S1 vorgesehen, die den Funktionsablauf und den Leitungsabschluß des Datenendgeräts sicherstellt. Im Gegensatz zu bekannten Datenendgeräten sind in dem Datenendgerät auch Umschalteinheiten U1 und U2 vorgesehen. Über die Umschalteinheit U1 kann die Steuereinheit S1 entweder mit dem Monitor M1 als periphere Einheit oder der Leitung L1 verbunden werden. In entsprechender Weise kann über die Umschalteinheit U2 die Steuereinheit S1 entweder mit der Tastatur T1 oder der Leitung L2 verbunden werden. Wenn an den Leitungen L1 und L2 keine Datenstation angeschlossen ist, befinden sich die Umschalteinheiten U1 und U2 in den in FIG 2 dargestellten Stellungen und das Datenendgerät kann in bekannter Weise mit den angeschlossenen peripheren Einheiten T1 und M1 zusammenarbeiten.

Bei der Darstellung in FIG 3 ist an den Leitungen L1 und L2 eine Datenstation angeschlossen, die die Zentraleinheit Z2, die Tastatur T2 und den Monitor M2 mit dem Bildschirm B2 enthält. Eine Überwachungsstufe in der Steuereinheit S1 erkennt, daß an den Leitungen L1 und L2 die Datenstation angeschlossen ist, die eine Verbindungsanforderung an das Datenendgerät gestellt hat und die Umschalteinheiten U1 und U2 trennen nun den Monitor M1 bzw. die Tastatur T1 von der Steuereinheit S1 und verbinden diese mit der Leitung L1 bzw. der Leitung L2. In einer Steuereinheit S2 der Zentraleinheit Z2 werden nun die Leitungen L1 und L2 mit dem Monitor M2 bzw. der Tastatur T2 verbunden und an der Datenstation wird die Bedienoberfläche des Datenendgeräts abgebildet, so daß das Datenendgerät über die Datenstation ferngesteuert werden kann.

Die Umschalteinheiten U1 und U2 können als übliche Umschalter ausgebildet sein, jedoch erweist es sich als vorteilhaft, diese Umschalteinheiten U1 und U2 programmgesteuert auszubilden. In entsprechender Weise erweist es sich auch als zweckmäßig in der Datenstation die Verbindung zwischen den Leitungen L1 und L2 und dem Monitor M2 bzw. der Tastatur T2 programmgesteuert durchzuführen.

Nach der Verbindung zwischen der Datenstation und dem Datenendgerät können am Datenendgerät empfangene oder dort erstellte Texte zur Datenstation übertragen werden und umgekehrt können auch an der Datenstation erstellte Texte zum Datenendgerät übertragen werden. Außerdem können alle Funktionen des Datenendgeräts von der Datenstation aus ausgelöst werden, da diese im wesentlichen dieselbe Bedienoberfläche aufweisen soll wie das Datenendgerät.

Es können weitere Umschalteinheiten vorgesehen werden, um andere periphere Einheiten, wie beispielsweise einen peripheren Speicher oder einen Drucker von dem Datenendgerät zu trennen und mit entsprechenden peripheren Einheiten der Datenstation zu verbinden.

Da die Umschalteinheiten U1 und U2 die peripheren Einheiten von der Zentraleinheit Z1 elektrisch und/oder logisch trennen und mit den entsprechenden peripheren Einheiten der Datenstation verbinden, können die peripheren Einheiten des Datenendgeräts auch mechanisch abgetrennt und von der Zentraleinheit Z1 entfernt werden.

Bei der Darstellung in FIG 4 sind die peripheren Einheiten von der Zentraleinheit Z1 abgetrennt und das Datenendgerät wird ausschließlich durch die Datenstation gesteuert. In diesem Fall stellt das Datenendgerät unter anderem einen vorgeschriebenen Leitungsabschluß der Fernleitung FL dar und stellt eine vorgeschriebene Dienstgüte sicher. Eine lokale Nutzung des Datenendgeräts ist in diesem Fall nicht mehr möglich, da die Umschalteinheiten U1 und U2 sich in der dargestellten Stellung befinden. Im Gegensatz hierzu können bei der Darstellung in FIG 3 gegebenenfalls der Überwachungseinheit auch Signale zugeführt werden, die dann, wenn trotz des Anschlusses der Datenstation eine lokale Nutzung des Datenendgeräts erwünscht ist, die Umschalteinheiten U1 und U2 in die in FIG 2 dargestellten Stellungen bringt, so daß die Steuereinheit S1 mit dem Monitor M1 und der Tastatur T1 verbunden ist. Die Überwachungseinheit kann auch derart ausgebildet sein, daß die Umschalteinheiten U1 und U2 nur dann die Steuereinheit S1 mit der Datenstation verbinden, wenn diese eine Übertragung von Daten zwischen dem Datenendgerät und der Datenstation wünscht.

## Patentansprüche

1. Anordnung zum Übertragen von Daten unter Verwendung eines an einer Übertragungsstrekke angeschlossenen Datenendgeräts, das eine zentrale Steuereinheit (S1) enthält und an dem periphere Einheiten (M1, T1) anschließbar sind und unter Verwendung einer mit dem Datenendgerät verbundenen Datenstation, die ebenfalls eine zentrale Steuereinheit (S2) und entsprechende periphere Einheiten (M2, T2) aufweist und mittels der zu übertragende Daten ein- und ausgebbar sind, **dadurch gekennzeichnet,** daß das Datenendgerät Umschalteinheiten (U1, U2) enthält, die bei einer Verbindung des Datenendgeräts mit der Datenstation wenigstens einen Teil der peripheren Einheiten (M1, T1) des Datenendgeräts von dessen zentraler Steuereinheit (S1) trennt und über Leitungen (L1, L2) eine Verbindung zu entsprechenden peripheren Einheiten (T2, M2) der Datenstation herstellt.

2. Anordnung nach Anspruch 1, **dadurch gekennzeichnet,** daß das Datenendgerät als eine Fernschreibmaschine ausgebildet ist.

3. Anordnung nach Anspruch 1 oder Anspruch 2, **dadurch gekennzeichnet,** daß die Datenstation als ein Personal Computer ausgebildet ist.

4. Anordnung nach einem der Ansprüche 1 bis 3, **dadurch gekennzeichnet,** daß die Umschalteinheiten (U1, U2) programmgesteuert ausgebildet sind.

5. Anordnung nach einem der Ansprüche 1 bis 4, **dadurch gekennzeichnet,** daß das Datenendgerät eine Überwachungsstufe enthält, die überprüft, ob eine Verbindung zu der Datenstation vorhanden ist oder nicht.

6. Anordnung nach einem der Ansprüche 1 bis 5, **dadurch gekennzeichnet,** daß die Verbindungen zu den peripheren Einheiten (T2, M2) der Datenstation über die zentrale Steuereinheit (S2) der Datenstation erfolgt.

7. Anordnung nach einem der Ansprüche 1 bis 6, **dadurch gekennzeichnet,** daß die Datenstation die Bedienoberfläche des Datenendgeräts nachbildet.

## Claims

1. Arrangement for data transmission using a data terminal which is connected to a transmission link, contains a central control unit (S1) and to which peripheral units (M1, T1) can be connected and using a data station which is connected to the data terminal, likewise has a central control unit (S2) and corresponding peripheral units (M2, T2) and by means of which data to be transmitted can be input and output, characterised in that the data terminal contains changeover units (U1, U2), which in the case of a connection of the data terminal to the data station separates at least some of the peripheral units (M1, T1) of the data terminal from its central control unit (S1) and establishes a connection to corresponding peripheral units (T2, M2) of the data station via lines (L1, L2).

2. Arrangement according to Claim 1, characterised in that the data terminal is designed as a teleprinter.

3. Arrangement according to Claim 1 or Claim 2, characterised in that the data station is designed as a personal computer.

4. Arrangement according to one of Claims 1 to 3, characterised in that the changeover units (U1, U2) are designed to be program-controlled.

5. Arrangment according to one of Claims 1 to 4, characterised in that the data terminal contains a monitoring stage, which checks whether a connection to the data station exists or not.

6. Arrangement according to one of Claims 1 to 5, characterised in that the connections to the peripheral units (T2, M2) of the data station takes place via the central control unit (S2) of the data station.

7. Arrangement according to one of Claims 1 to 6, characterised in that the data station simulates the operator interface of the data terminal.

## Revendications

1. Dispositif pour la transmission de données moyennant l'utilisation d'un terminal de transmission de données qui est raccordé à une section de transmission qui comporte une unité centrale de commande (S1) et auquel peuvent être raccordées des unités périphériques (M1,T1), et moyennant l'utilisation d'un poste de transmission de données qui est raccordé au terminal de transmission de données et qui comporte également une unité centrale de commande (S2) et des unités périphériques correspondantes (M2,T2), et au moyen duquel les données devant être transmises peuvent être introduites et extraites, caractérisé par le fait que le terminal de transmission de données comporte des unités de commutation (U1,U2) qui, dans le cas d'un raccordement du terminal de transmission de données au poste de transmission de données, sépare au moins une partie des unités périphériques (M1,T1) du terminal de transmission de données, de l'unité centrale de commande (S1) de ce terminal et établit, par l'intermédiaire de lignes (L1,L2), une liaison avec des unités périphériques correspondantes (T2,M2) du poste de transmission de données.

2. Dispositif suivant la revendication 1, caractérisé par le fait que le terminal de transmission de données est réalisé sous la forme d'un télescripteur.

3. Dispositif suivant la revendication 1 ou 2, caractérisé par le fait que le poste de transmission de données est agencé sous la forme d'un ordinateur personnel.

4. Dispositif suivant l'une des revendications 1 à 3, caractérisé par le fait que les unités de commutation (U1,U2) sont agencées de manière à être commandées par le programme.

5. Dispositif suivant l'une des revendications 1 à 4, caractérisé par le fait que le terminal de transmission de données comporte un étage de contrôle qui vérifie si une liaison avec le poste de transmission de données est présente ou non.

6. Dispositif suivant l'une des revendications 1 à 5, caractérisé par le fait que les liaisons avec les unités périphériques (T2,M2) du poste de transmission de données s'effectuent par l'intermédiaire de l'unité centrale de commande (S2) du poste de transmission de données.

7. Dispositif suivant l'une des revendications 1 à 6, caractérisé par le fait que le poste de transmission de données simule la surface de commande du terminal de transmission de données.

FIG 1

FIG 2

FIG 3

FIG 4